# EUROPEAN PATENT SPECIFICATION

(11) **EP 3 500 893 B1**
(45) Date of publication and mention of the grant of the patent: **07.04.2021**
(21) Application number: 17769126.8
(22) Date of filing: 18.08.2017
(51) Int. Cl.: G03B 21/20

(54) **ILLUMINATION DEVICE AND IMAGE PROJECTION DEVICE**
BELEUCHTUNGSVORRICHTUNG UND BILDPROJEKTIONSVORRICHTUNG
DISPOSITIF D'ÉCLAIRAGE ET DISPOSITIF DE PROJECTION D'IMAGE

(30) Priority: 22.08.2016 JP 2016162139
(43) Date of publication of application: 26.06.2019
(73) Proprietor: Ricoh Company, Ltd., Tokyo 143-8555 (JP)
(72) Inventor: KADO, Takahiro, Tokyo 143-8555 (JP)
(74) Representative: SSM Sandmair
(86) International application number: PCT/JP2017/029607
(87) International publication number: WO 2018/038011

(56) References cited:
- US-A1- 2012 127 435
- US-A1- 2014 293 232
- US-A1- 2015 098 065
- US-A1- 2016 238 923

## Description

### Technical Field

The present invention relates to illumination devices and image projection devices.

### Background Art

In recent years, with rapidly growing popularity of display devices with a big screen, it is becoming common to have a conference, a presentation, an orientation, etc., using such display devices. As such a display device, an image projection device (i.e., a projector) for projection to display an enlarged image on a screen, etc., is used, for example.

According to a proposed configuration (see PLT 1, for example), such an image projection device includes an illumination device with combination of a light source such as a laser that emits excitation light and a phosphor that absorbs excitation light to generate fluorescent light in a predetermined wavelength range. Excitation light and fluorescent light emitted from an illumination device are turned into illumination light, which is guided by a light tunnel, etc., to pass through an image forming element and a projection optical unit, so that a predetermined image is projected on a screen, etc.

### Citation List

### Patent Literature

[PTL 1] Japanese Patent No. 4900736

### Summary of Invention

### Technical Problem

However, such an image projection device as above requires two light paths, i.e., a light path to guide excitation light to a light tunnel and a light path to guide fluorescent light generated by a phosphor to the light tunnel. The two light paths need to be designed such that one of the light paths bypasses the other light path. As a consequence, there is a problem that downsizing of an illumination device is limited.

The present invention is provided in light of the above problem. The object of the present invention is to downsize an illumination device.

Examples of conventional image projection devices are disclosed in US 2015/098065 A1, US 2016/238923 A1, US 2014/293232 A1 and US 2012/127435 A1.

### Solution to Problem

An illumination device according to the present invention, as defined in independent claim 1, includes: a light source configured to emit source light; a fluorescence generating unit configured to generate fluorescent light by use of the source light from the light source as excitation light, the fluorescent light having a longer wavelength than the source light; a wavelength selecting unit configured to alternately place either a first segment or a second segment in a light path, the first segment allowing the source light to pass therethrough, and the second segment reflecting the source light while allowing the fluorescent light to pass therethrough; a polarization converting unit disposed in a light path between the light source and the wavelength selecting unit and configured to convert polarization of light between linear polarization and circular polarization such that a first linear polarization component input thereto is converted into circular polarization and circular polarization input thereto is converted into a second linear polarization component perpendicular to the first linear polarization component; and a light guiding unit disposed in a light path between the light source and the polarization converting unit and configured to guide the first linear polarization component of the source light from the light source and the fluorescent light arriving from the fluorescence generating unit to the polarization converting unit and to guide the second linear polarization component of the source light arriving from the polarization converting unit to the fluorescence generating unit. When the first segment is placed in the light path, the source light from the light source travels through the light guiding unit, the polarization converting unit, and the first segment of the wavelength selecting unit in sequential order for output as first illumination light. When the second segment is placed in the light path, the source light from the light source travels through the light guiding unit and the polarization converting unit to the wavelength selecting unit, and is then reflected by the second segment of the wavelength selecting unit to travel through the polarization converting unit and the light guiding unit to the fluorescence generating unit, which generates the fluorescent light traveling through the light guiding unit, the polarization converting unit, and the second segment of the wavelength selecting unit in sequential order for output as second illumination light, the second illumination light being output in a same direction as the first illumination light.

An image projection device according to the invention is defined in independent claim 10.

### Advantageous Effects of Invention

According to the disclosed technique, an image projection device can be downsized.

### Brief Description of Drawings

[fig.1]FIG. 1 is a drawing schematically illustrating an example of an image projection device according to a first embodiment;
[fig.2]FIG. 2 is a drawing illustrating an example of spectral transmittance characteristics of a wavelength-selective polarization splitting element used in the first embodiment;
[fig.3]FIG. 3 is an enlarged plan view illustrating a color wheel used in the first embodiment;
[fig.4]FIG. 4 is a drawing illustrating an example of spectral transmittance characteristics of the color wheel used in the first embodiment;
[fig.5]FIG. 5 is an enlarged plan view illustrating an example of a phosphor wheel used in the first embodiment;
[fig.6]FIG. 6 is a drawing illustrating an example of a timing chart of extracting each illumination light in a time-shared order by use of the image projection device according to the first embodiment;
[fig.7]FIG. 7 is an enlarged plan view illustrating an example of a color wheel according to a second embodiment;
[fig.8]FIG. 8 is a drawing illustrating an example of spectral transmittance characteristics of the color wheel used in the second embodiment;
[fig.9]FIG. 9 is a drawing illustrating an example of a timing chart of extracting each illumination light in a time-shared order by use of an image projection device according to the second embodiment;
[fig.10] FIG. 10 is an enlarged plan view illustrating an example of a phosphor wheel used in a third embodiment;
[fig.11]FIG. 11 is a drawing illustrating an example of a timing chart of extracting each illumination light in a time-shared order by use of an image projection device according to the third embodiment;
[fig.12]FIG. 12 is an enlarged plan view illustrating an example of a phosphor wheel used in a fourth embodiment;
[fig.13]FIG. 13 is a drawing illustrating an example of a timing chart of extracting each illumination light in a time-shared order by use of an image projection device according to the fourth embodiment;
[fig.14]FIG. 14 is a drawing schematically illustrating an example of an image projection device according to a fifth embodiment;
[fig.15]FIG. 15 is a drawing illustrating an example of spectral transmittance characteristics of a wavelength-selective polarization splitting element used in the fifth embodiment; and
[fig.16]FIG. 16 is a drawing schematically illustrating an example of an image projection device according to the sixth embodiment.

### Description of Embodiments

The following description explains embodiments of the present invention, with reference to drawings. In each of the drawings, there may be a case where the same constituent elements are assigned the same reference signs so as to omit a duplicated explanation.

### <First Embodiment>

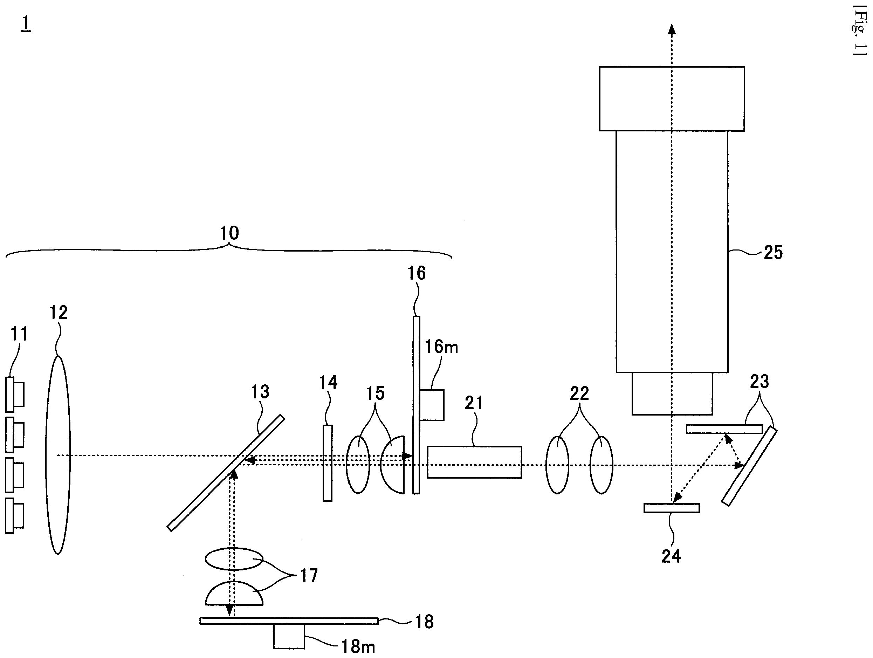

FIG. 1 is a drawing schematically illustrating an example of an image projection device according to the first embodiment. As illustrated in FIG. 1, an image projection device 1 includes an illumination device 10, a light tunnel 21, a lens unit 22, a mirror unit 23, an image forming element 24, and a projection optical unit 25.

The illumination device 10 includes a light source 11, a condenser lens 12, a wavelength-selective polarization splitting element 13, a quarter-wave plate 14, a lens unit 15, a color wheel 16, a lens unit 17, and a phosphor wheel 18. The illumination device 10 sequentially emits blue light, red light, and green light in the same direction (i.e., on the same emission light path) towards the light tunnel 21 in a time-shared order.

In the illumination device 10, the light source 11 emits light (i.e., source light) including a first linear polarization component. In the following explanation of the present embodiment, the light source 11 is, for example, a laser diode that emits blue laser light with a wavelength λB, which includes a P-polarization component (i.e., a P-wave). The wavelength λB may be, for example, longer than 400 nm and shorter than 470 nm.

However, not being limited to as above, the light source 11 may be a light emitting diode or an organic electro luminescence (EL) element, which emits blue light, or may be a light source with combination of such a light emitting diode and an organic EL element. Alternatively, the light source 11 may be a laser diode, a light emitting diode, or an organic EL element, etc., which emits light in a wavelength range of the ultraviolet spectrum, or may be a light source with combination of such a laser diode, a light emitting diode, and an organic EL element.

Further, the number of light sources 11 may be one or more. Further, a coupling lens may be disposed between the light source 11 and the condenser lens 12, for forming laser light emitted by the light source 11 into a nearly parallel luminous flux and guiding to the condenser lens 12.

The blue laser light emitted by the light source 11 is utilized as first illumination light. Further, the blue laser light emitted by the light source 11 is utilized as excitation light for generating fluorescent light at the phosphor wheel 18.

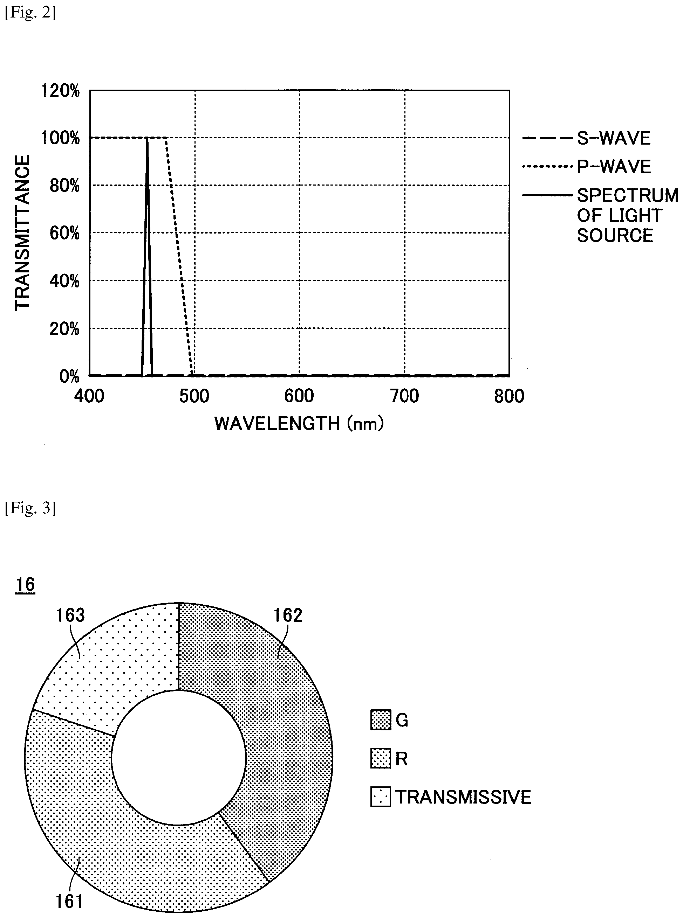

The blue laser light emitted by the light source 11 passes (i.e., travels) through the condenser lens 12 to be formed into a nearly parallel luminous flux and become incident to the wavelength-selective polarization splitting element 13. The wavelength-selective polarization splitting element 13 is an example of a light guiding unit having spectral transmittance characteristics as illustrated in FIG. 2.

The wavelength-selective polarization splitting element 13 has characteristics to transmit a P-wave (i.e., to allow a P-wave to pass therethrough) and not to transmit an S-wave (i.e., to reflect an S-wave), with respect to light with the wavelength λB emitted by the light source 11. Note that, as indicated by the spectral transmittance characteristics illustrated in FIG. 2, light with wavelengths of approximately 500 nm or more is reflected by the wavelength-selective polarization splitting element 13, regardless of whether a P-wave or an S-wave (i.e., regardless of polarization characteristics). As the wavelength-selective polarization splitting element 13, a polarizing beamsplitter may be used, for example.

Referring back to FIG. 1, blue laser light of a P-wave becoming incident to the wavelength-selective polarization splitting element 13 is transmitted through the wavelength-selective polarization splitting element 13, and then guided to the quarter-wave plate 14, which is a polarization converting unit that converts polarization of light between linear polarization and circular polarization. Light transmitted through the quarter-wave plate 14 is converted from light having a P-wave (i.e., P-polarization) to light having circular polarization, and then passes through the lens unit 15 to become incident to the color wheel 16, which is a wavelength selecting unit.

Note that the polarization converting unit is not limited to a quarter-wave plate. For example, the polarization converting unit may be one of the lenses constituting the lens unit 15, etc., which is provided with an obliquely vapor-deposited film of Ta₂O₅, etc., formed on the incident surface. Note that, to form an obliquely vapor-deposited film, an object to be vapor-deposited is disposed at an angle to an incoming direction of vapor-depositing material (i.e., a direction towards the source of vapor deposition), such that the vapor-depositing material is obliquely accumulated with respect to a direction normal to a predetermined surface of the object to be vapor-deposited.

The lens unit 15 may be configured, for example, with combination of a biconvex lens, a plane-convex lens, etc., as appropriate, so as to have functions for condensing a nearly parallel luminous flux into a spot on the color wheel 16 and for condensing diffused light from the color wheel 16 to convert to a nearly parallel luminous flux.

FIG. 3 is an enlarged plan view illustrating a color wheel used in the first embodiment, which is viewed from the light incident side. As illustrated in FIG. 3, the color wheel 16 used in the present embodiment has a configuration in which a disk-shaped member is divided into multiple fan-shaped segments. Specifically, the color wheel 16 has three divided fan-shaped segments, i.e., a red (R) segment 161, a green (G) segment 162, and a transmissive segment 163.

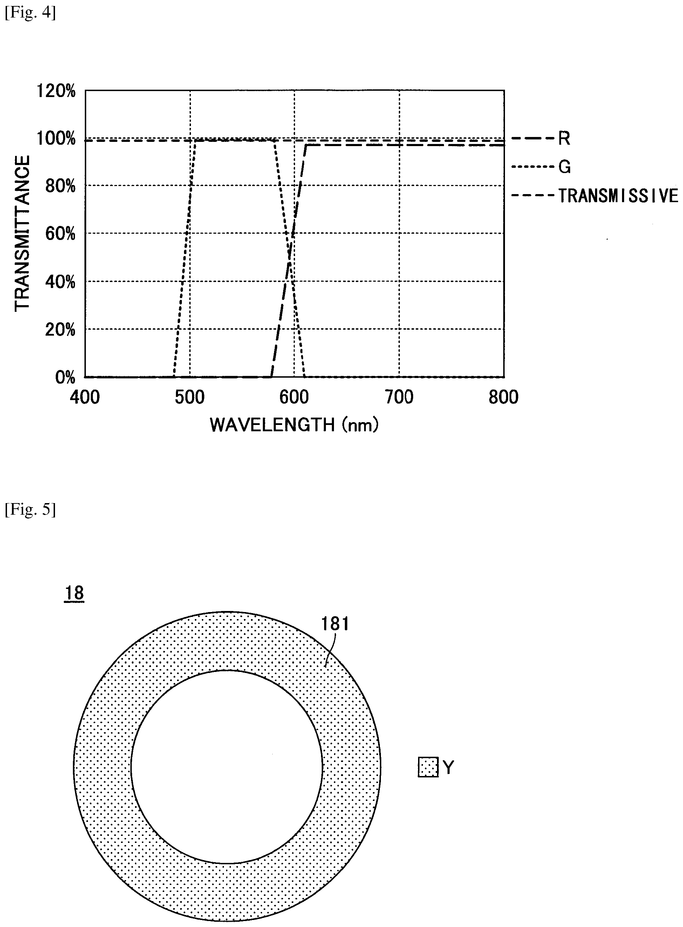

The color wheel 16 has spectral transmittance characteristics as illustrated in FIG. 4, for example. The R segment 161 is provided with a filter that transmits red light, such that, as illustrated in FIG. 4, light with wavelengths in a range of approximately 600 nm or more is transmitted and light with wavelengths outside the range is reflected. The G segment 162 is provided with a filter that transmits green light, such that, as illustrated in FIG. 4, light with wavelengths in a range of approximately 500 nm or more and 580 nm or less is transmitted and light with wavelengths outside the range is reflected.

The transmissive segment 163 transmits light with all wavelengths. The transmissive segment 163 may be configured with a clear glass, a clear diffuser panel, an opened hole, etc. A diffuser panel may be configured, for example, to have on the surface a number of structures with varying sizes of uneveness. In a case where the transmissive segment 163 is configured with a diffuser panel that diffuses light, unevenness of blue light appearing on a screen, etc., and speckle appearing on a screen, etc., can be reduce.

Referring back to FIG. 1, the color wheel 16 is provided with a driving unit 16m for rotating the color wheel 16, such as a stepping motor, at the shaft center of the color wheel 16. The color wheel 16 is driven by the driving unit 16m to rotate at predetermined timings, such that the incident position of light from the lens unit 15 is on one of the three segments that are switched with the rotation, i.e., the R segment 161, the G segment 162, or the transmissive segment 163. In other words, one of the segments is disposed on the light paths of blue laser light and fluorescent light alternately as time passes.

That is to say, whether light incident to the color wheel 16 is transmitted through the color wheel 16 or reflected by the color wheel 16 is determined based on a wavelength of the light condensed by the lens unit 15 and a segment selectively disposed at the incident position of the light from the lens unit 15.

When the transmissive segment 163 is disposed at the incident position of light from the lens unit 15, blue laser light incident to the color wheel 16 is transmitted through the color wheel 16 to become incident to the light tunnel 21 as blue illumination light. As the blue illumination light transmitted through the color wheel 16 is light having circular polarization, speckle appearing on a screen, etc., can be reduced.

Note that the transmissive segment 163 is a typical example of a first segment according to the present invention. Further, the blue illumination light is a typical example of first illumination light according to the present invention.

Contrarily, when the R segment 161 or the G segment 162 is disposed at the incident position of light from the lens unit 15, blue laser light incident to the color wheel 16 is reflected by the color wheel 16. Then, the blue laser light reflected by the color wheel 16 passes through the lens unit 15 to become incident to the quarter-wave plate 14. The light transmitted through the quarter-wave plate 14 is converted from light having circular polarization to light having an S-wave (i.e., S-polarization), and then is incident to the wavelength-selective polarization splitting element 13. Note that an S-polarization component is perpendicular to a P-polarization component.

The blue laser light of an S-wave incident to the wavelength-selective polarization splitting element 13 is reflected by the wavelength-selective polarization splitting element 13 and passes through the lens unit 17 to become incident to the phosphor wheel 18. In other words, the wavelength-selective polarization splitting element 13 guides light having an S-wave (i.e., S-polarization) to the phosphor wheel 18.

The lens unit 17 may be configured, for example, with combination of a biconvex lens, a plane-convex lens, etc., as appropriate, so as to have functions for condensing a nearly parallel luminous flux into a spot on the phosphor wheel 18 and for condensing diffused light from the phosphor wheel 18 to convert to a nearly parallel luminous flux.

FIG. 5 is an enlarged plan view illustrating a phosphor wheel used in the first embodiment, which is viewed from the light incident side. As illustrated in FIG. 5, the phosphor wheel 18 used in the present embodiment is a fluorescence generating unit, which is a disk-shaped member including a planar surface provided with a yellow phosphor 181 formed in the rotating direction. By use of blue laser light as excitation light, the yellow phosphor 181 generates yellow fluorescent light, which has a longer wavelength than blue laser light.

Referring back to FIG. 1, , the phosphor wheel 18 is provided with a driving unit 18m for rotating the phosphor wheel 18, such as a stepping motor, at the shaft center of the phosphor wheel 18. Note that, in the present embodiment, the phosphor wheel 18 may be configured not to move, as the single-colored yellow phosphor 181 is formed on approximately the whole surface of the phosphor wheel 18. In this case, cost-cutting is enabled, not only because the phosphor wheel 18 can be downsized into an arbitrary shape but also because the driving unit 18m is not needed. Furthermore, noise can be reduced because the phosphor wheel 18 does not rotate.

By use of blue laser light incident to the phosphor wheel 18 as excitation light, the yellow phosphor 181 generates yellow fluorescent light. The yellow fluorescent light passes through the lens unit 17 to become incident to the wavelength-selective polarization splitting element 13. The yellow fluorescent light, which has a wavelength of 500 nm or more, is reflected by the wavelength-selective polarization splitting element 13 (cf. FIG. 2) to be guided to the quarter-wave plate 14. Then, the yellow fluorescent light passes through the quarter-wave plate 14 and the lens unit 15 to become incident to the color wheel 16.

When the R segment 161 or the G segment 162 is disposed at the incident position of light from the lens unit 15, yellow fluorescent light incident to the color wheel 16 is transmitted through the color wheel 16.

For example, when the R segment 161 is disposed at the incident position of light from the lens unit 15, yellow fluorescent light incident to the color wheel 16 is transmitted through the color wheel 16 to become incident to the light tunnel 21 as red illumination light. Furthermore, when the G segment 162 is disposed at the incident position of light from the lens unit 15, yellow fluorescent light incident to the color wheel 16 is transmitted through the color wheel 16 to become incident to the light tunnel 21 as green illumination light.

Note that the R segment 161 and the G segment 162 are typical examples of a second segment according to the present invention. Further, the red illumination light and the green illumination light are typical examples of second illumination light according to the present invention.

The light tunnel 21 is a cylindrical member with empty space inside. Each illumination light incident to the light tunnel 21 is repeatedly reflected inside the light tunnel 21, so that illuminance distribution is homogenized at the exit of the light tunnel 21. In other words, the light tunnel 21 has a function as an illuminance homogenizing unit for reducing light quantity unevenness of each illumination light. Note that, instead of the light tunnel 21, another type of an illuminance homogenizing unit such as a fly-eye lens may be employed.

Each illumination light with homogenized illuminance distribution after passing through the light tunnel 21 is relayed by the lens unit 22 and reflected by the mirror unit 23 to irradiate the image forming element 24.

The image forming element 24 controls tones of each illumination light on a pixel basis, to form a color projection image. The image forming element 24 is configured with, for example, a digital micromirror device (DMD). A DMD is provided with a micromirror for each pixel, which can be held in a state of either one of two different angles.

That is to say, each micromirror of a DMD turns into a state of either an angle (i.e., ON-state) for reflecting each illumination light towards the projection optical unit 25 or an angle (i.e., OFF-state) for reflecting each illumination light towards an internal absorber so as not to externally output the light. In this way, light for projection can be controlled on a displaying pixel basis. Further, a time ratio of ON-state can be adjusted with respect to each micromirror of a DMD in a pulse-width modulation (PWM) format, so as to perform tone expression on a displaying pixel basis.

Note that the image forming element 24 is not limited to be a DMD. That is to say, the image forming element 24 can be an element for forming a color projection image with use of each illumination light from the illumination device 10, such as liquid crystal.

When the image forming element 24 of the image projection device 1 generates an image, the image forming element 24 is irradiated by each of red, green, and blue illumination light in a time-shared order, so that the image forming element 24 controls tones of each illumination light on a displaying pixel basis, in order to perform projection on a screen, etc., through the projection optical unit 25. In this way, a color image is visualized on a screen, etc., taking advantage of the afterimage phenomenon to human eyes.

Note that the light tunnel 21, the lens unit 22, and the mirror unit 23 are typical examples of an optical path constituting unit. Further, the image forming element 24 is disposed on an optical path constituted by the optical path constituting units.

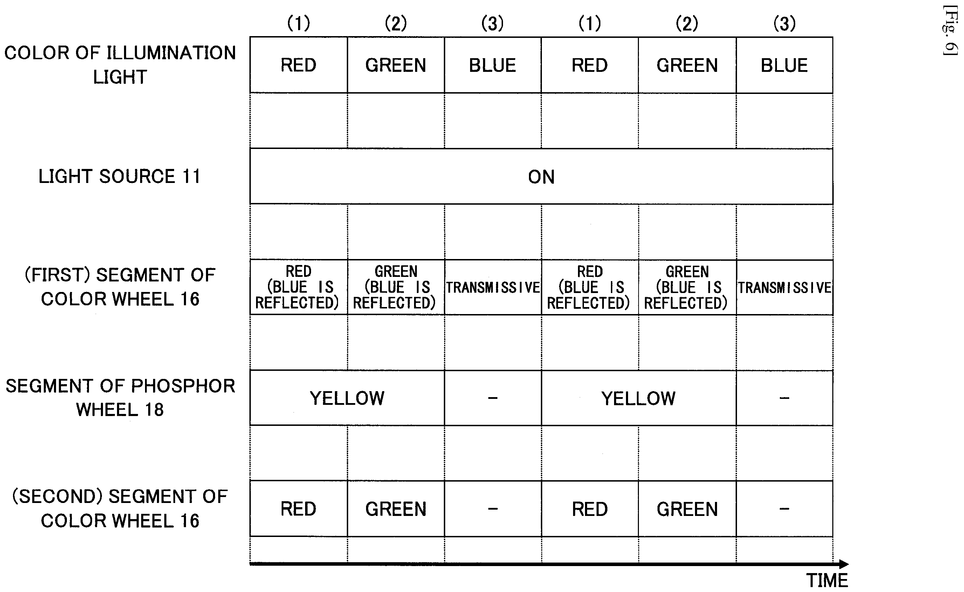

With reference to a timing chart illustrated in FIG. 6, the following description explains relations of colors extracted as illumination light, an emission state of the light source 11, (first) segments of the color wheel 16, segments of the phosphor wheel 18, and (second) segments of the color wheel 16.

In the period where each of red, green, and blue illumination light is extracted in a time-shared order, the light source 11 is on a lighted state (i.e., ON-state).

With respect to a period (1) of FIG. 6 in which red illumination light is extracted, when blue laser light from the light source 11 becomes incident to the color wheel 16 for the first time, the R segment 161 is disposed at the incident position of light from the lens unit 15. Hence, the blue laser light is reflected by the color wheel 16, and then passes through a predetermined optical system as explained with reference to FIG. 1, to become incident to the phosphor wheel 18.

Then, yellow fluorescent light, which is generated by the yellow phosphor 181, passes through the predetermined optical system as explained with reference to FIG. 1, to become incident to the color wheel 16 again (i.e., for the second time). At this point, the R segment 161 is still disposed at the incident position of light from the lens unit 15. Therefore, the yellow fluorescent light incident to the color wheel 16 is transmitted through the color wheel 16 and extracted as red illumination light, which becomes incident to the light tunnel 21.

Next, with respect to a period (2) of FIG. 6 in which green illumination light is extracted, when blue laser light from the light source 11 becomes incident to the color wheel 16 for the first time, the G segment 162 is disposed at the incident position of light from the lens unit 15. Hence, the blue laser light is reflected by the color wheel 16, and then passes through the predetermined optical system as explained with reference to FIG. 1, to become incident to the phosphor wheel 18.

Then, yellow fluorescent light, which is generated by the yellow phosphor 181, passes through the predetermined optical system as explained with reference to FIG. 1, to become incident to the color wheel 16 again (i.e., for the second time). At this point, the G segment 162 is still disposed at the incident position of light from the lens unit 15. Therefore, the yellow fluorescent light incident to the color wheel 16 is transmitted through the color wheel 16 and extracted as green illumination light, which becomes incident to the light tunnel 21.

With respect to a period (3) of FIG. 6 in which blue illumination light is extracted, when blue laser light from the light source 11 becomes incident to the color wheel 16 for the first time, the transmissive segment 163 is disposed at the incident position of light from the lens unit 15. Hence, the blue laser light is transmitted through the color wheel 16 and extracted as blue illumination light, which becomes incident to the light tunnel 21. In this case, the blue laser light from the light source 11 does not become incident to the phosphor wheel 18 because, when the blue laser light becomes incident to the color wheel 16 for the first time, the blue laser light is directly transmitted through the color wheel 16 (as indicated with "-" with respect to the period (3) of FIG. 6).

Subsequently, the periods (1) through (3) of FIG. 6 are repeated as time passes. Note that the light source 11, the color wheel 16, the phosphor wheel 18, the image forming element 24, etc., can be controlled by means of a control device provided outside the image projection device 1.

Hardware of such a control device may be configured with, for example, a central processing unit (CPU), a read-only memory (ROM), a random access memory (RAM), etc. The control device utilizes the RAM as a work memory to control the light source 11, the color wheel 16, the phosphor wheel 18, and the image forming element 24, in accordance with a program pre-stored in the ROM. Note that the control device may also be provided inside the image projection device 1.

As described above, in the image projection device 1, the quarter-wave plate 14 is disposed on the light path between the wavelength-selective polarization splitting element 13 and the color wheel 16.

Further, a first light path is constituted, such that blue laser light emitted by the light source 11 passes through the wavelength-selective polarization splitting element 13, the quarter-wave plate 14, and the color wheel 16 in sequential order, to be output from the color wheel 16 towards the light tunnel 21.

Further, a second light path is constituted, such that blue laser light emitted by the light source 11 passes through the wavelength-selective polarization splitting element 13 and the quarter-wave plate 14 in sequential order, to be reflected by the color wheel 16, converted to light having S-polarization at the quarter-wave plate 14, and guided via the wavelength-selective polarization splitting element 13 to the phosphor wheel 18, for generating fluorescent light. Further, on the second light path, the fluorescent light passes through the wavelength-selective polarization splitting element 13, the quarter-wave plate 14, and the color wheel 16 in sequential order, to be output from the color wheel 16 towards the light tunnel 21.

As the first light path and the second light path are switched, based on a disposed segment of the color wheel 16, the light path from the wavelength-selective polarization splitting element 13 to the color wheel 16 can be common to the first light path and the second light path. That is to say, as there is no need to design two light paths in a conventional way such that one of the light paths bypasses the other light path, the illumination device 10 can be downsized.

Furthermore, as there is no other optical part disposed between the lens unit 17 and the phosphor wheel 18, decrease in light use efficiency can be reduced. Therefore, brightness of an image projected on a screen, etc., can be improved.

### <Second Embodiment

As the second embodiment, an example of using a color wheel that is different from the first embodiment is explained. Note that, in the second embodiment, explanation for constituent elements that are the same in the above explained embodiment may be omitted.

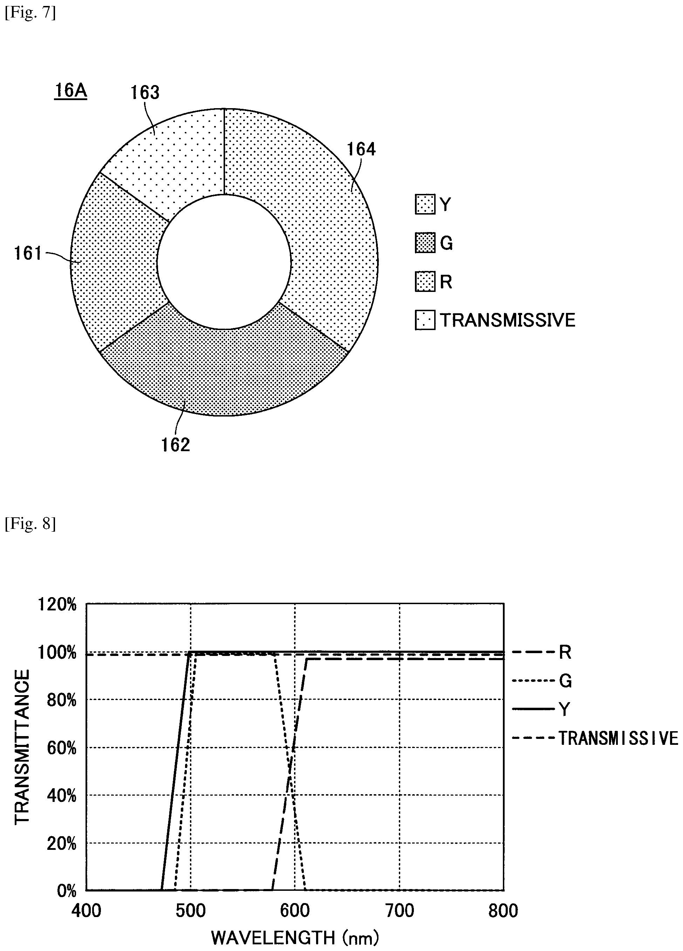

FIG. 7 is an enlarged plan view illustrating an example of a color wheel according to the second embodiment, which is viewed from the light incident side. In the present embodiment, instead of the color wheel 16, a color wheel 16A is employed in the illumination device 10. As illustrated in FIG. 7, the color wheel 16A used in the present embodiment has a configuration in which a disk-shaped member is divided into multiple fan-shaped segments. Specifically, the color wheel 16A has four divided fan-shaped segments, i.e., an R segment 161, a G segment 162, a transmissive segment 163, and a yellow (Y) segment 164. In other words, the color wheel 16A is different from the color wheel 16 (cf. FIG. 3) in terms of having the Y segment 164.

The color wheel 16A has spectral transmittance characteristics as illustrated in FIG. 8, for example. With respect to the R segment 161, the G segment 162, and the transmissive segment 163, the spectral transmittance characteristics are the same as the color wheel 16 illustrated in FIG. 4. The Y segment 164 is provided with a filter that transmits yellow light, such that, as illustrated in FIG. 8, light with wavelengths in a range of approximately 500 nm or more is transmitted and light with wavelengths shorter than the range is reflected.

The color wheel 16A is driven by the driving unit 16m to rotate at predetermined timings, such that the incident position of light from the lens unit 15 is on one of the four segments that are switched with the rotation, i.e., the R segment 161, the G segment 162, the transmissive segment 163, or the Y segment 164.

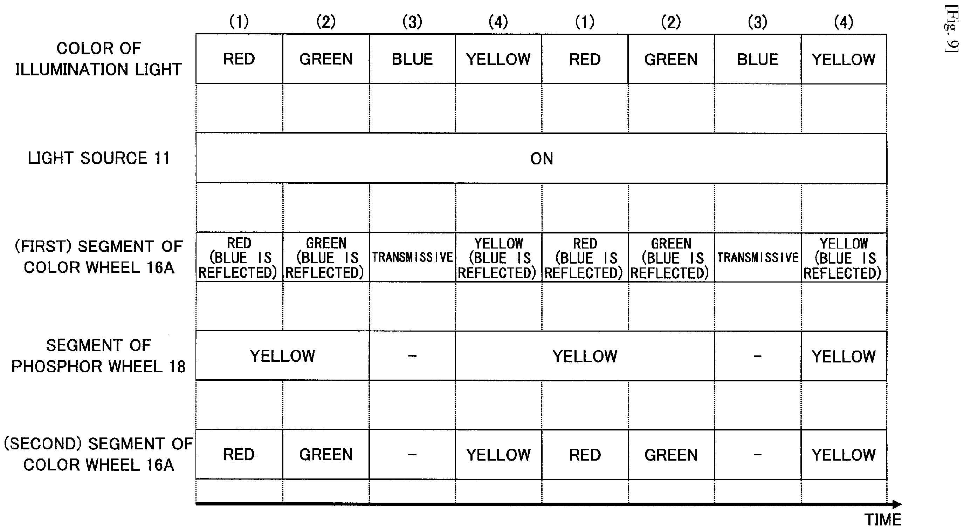

With reference to a timing chart illustrated in FIG. 9, the following description explains relations of colors extracted as illumination light, an emission state of the light source 11, (first) segments of the color wheel 16A, segments of the phosphor wheel 18, and (second) segments of the color wheel 16A.

In the period where each of red, green, blue, and yellow illumination light is extracted in a time-shared order, the light source 11 is on a lighted state (i.e., ON-state).

The timing chart as illustrated in FIG. 9 is the same as the timing chart as illustrated in FIG. 6, with respect to the period (1) in which red illumination light is extracted, the period (2) in which green illumination light is extracted, and the period (3) in which blue illumination light is extracted.

With respect to a period (4) of FIG. 9 in which yellow illumination light is extracted, when blue laser light from the light source 11 becomes incident to the color wheel 16A for the first time, the Y segment 164 is disposed at the incident position of light from the lens unit 15. Hence, the blue laser light is reflected by the color wheel 16A, and then passes through a predetermined optical system as explained with reference to FIG. 1, to become incident to the phosphor wheel 18.

Then, yellow fluorescent light, which is generated by the yellow phosphor 181, passes through the predetermined optical system as explained with reference to FIG. 1, to become incident to the color wheel 16A again (i.e., for the second time). At this point, the Y segment 164 is still disposed at the incident position of light from the lens unit 15. Therefore, the yellow fluorescent light incident to the color wheel 16A is transmitted through the color wheel 16A and extracted as yellow illumination light, which becomes incident to the light tunnel 21. Subsequently, the periods (1) through (4) of FIG. 9 are repeated as time passes.

As described above, there may be a configuration that includes the color wheel 16A provided with the Y segment 164 for extracting yellow illumination light. As yellow illumination light is extracted, brightness of an image projected on a screen, etc., can be improved.

### <Third Embodiment>

As the third embodiment, an example of changing characteristics of the phosphor wheel according to the second embodiment is explained. Note that, in the third embodiment, explanation for constituent elements that are the same in the above explained embodiments may be omitted.

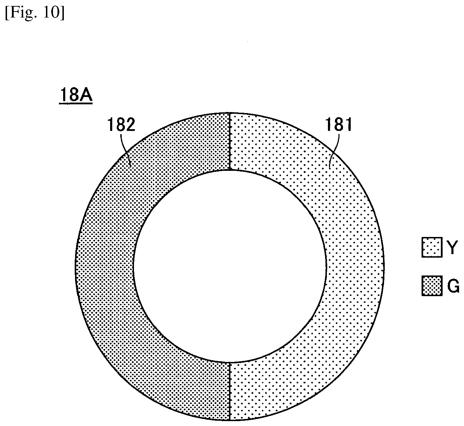

FIG. 10 is an enlarged plan view illustrating an example of a phosphor wheel used in the third embodiment, which is viewed from the light incident side. As illustrated in FIG. 10, a phosphor wheel 18A used in the present embodiment is a disk-shaped member divided into multiple segments for generating different fluorescent light, respectively, which is driven to rotate such that any one of the segments is irradiated with light from the wavelength-selective polarization splitting element 13 and is sequentially changed with rotation.

Specifically, the phosphor wheel 18A has two divided fan-shaped segments, i.e., a segment provided with a yellow phosphor 181 for generating yellow fluorescent light and a segment provided with a green phosphor 182 for generating green fluorescent light. In other words, the phosphor wheel 18A is different from the phosphor wheel 18 (cf. FIG. 5) in terms of having the green phosphor 182.

The phosphor wheel 18A is driven by the driving unit 18m to rotate at predetermined timings, such that the incident position of light from the lens unit 17 is on any one of the two segments that is switched with the rotation, i.e., the segment provided with the yellow phosphor 181 or the segment provided with the green phosphor 182.

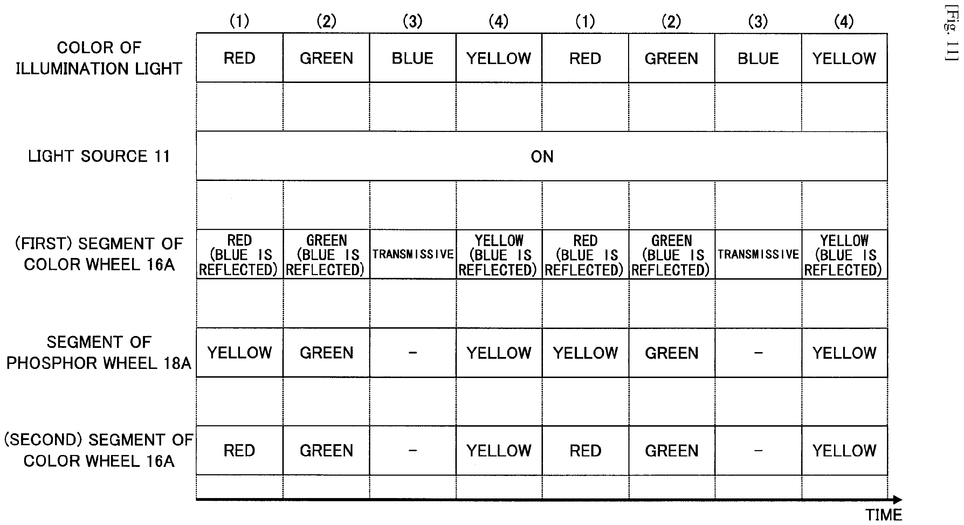

With reference to a timing chart illustrated in FIG. 11, the following description explains relations of colors extracted as illumination light, an emission state of the light source 11, (first) segments of the color wheel 16A, segments of the phosphor wheel 18A, and (second) segments of the color wheel 16A.

In the period where each of red, green, blue, and yellow illumination light is extracted in a time-shared order, the light source 11 is on a lighted state (i.e., ON-state).

With respect to a period (1) of FIG. 11 in which red illumination light is extracted, when blue laser light from the light source 11 becomes incident to the color wheel 16A for the first time, the R segment 161 is disposed at the incident position of light from the lens unit 15. Hence, the blue laser light is reflected by the color wheel 16A, and then passes through a predetermined optical system as explained with reference to FIG. 1, to become incident to the phosphor wheel 18A.

Here, with respect to the phosphor wheel 18A, the yellow phosphor 181 is disposed at the incident position of light from the lens unit 17. Hence, yellow fluorescent light, which is generated by the yellow phosphor 181, passes through the predetermined optical system as explained with reference to FIG. 1, to become incident to the color wheel 16A again (i.e., for the second time). At this point, the R segment 161 is still disposed at the incident position of light from the lens unit 15. Therefore, yellow fluorescent light incident to the color wheel 16A is transmitted through the color wheel 16A and extracted as red illumination light, which becomes incident to the light tunnel 21.

Next, with respect to a period (2) of FIG. 11 in which green illumination light is extracted, when blue laser light from the light source 11 becomes incident to the color wheel 16A for the first time, the G segment 162 is disposed at the incident position of light from the lens unit 15. Hence, the blue laser light is reflected by the color wheel 16A, and then passes through the predetermined optical system as explained with reference to FIG. 1, to become incident to the phosphor wheel 18A.

Here, with respect to the phosphor wheel 18A, the green phosphor 182 is disposed at the incident position of light from the lens unit 17. Hence, green fluorescent light, which is generated by the green phosphor 182, passes through the predetermined optical system as explained with reference to FIG. 1, to become incident to the color wheel 16A again (i.e., for the second time). At this point, the G segment 162 is still disposed at the incident position of light from the lens unit 15. Therefore, the green fluorescent light incident to the color wheel 16A is transmitted through the color wheel 16A and extracted as green illumination light, which becomes incident to the light tunnel 21.

Next, with respect to a period (3) of FIG. 11 in which blue illumination light is extracted, when blue laser light from the light source 11 becomes incident to the color wheel 16A for the first time, the transmissive segment 163 is disposed at the incident position of light from the lens unit 15. Hence, the blue laser light is transmitted through the color wheel 16A and extracted as blue illumination light, which becomes incident to the light tunnel 21. In this case, the blue laser light from the light source 11 does not become incident to the phosphor wheel 18A because, when the blue laser light becomes incident to the color wheel 16A for the first time, the blue laser light is directly transmitted through the color wheel 16A (as indicated with "-" with respect to the period (3) of FIG. 11).

With respect to a period (4) of FIG. 11 in which yellow illumination light is extracted, when blue laser light from the light source 11 becomes incident to the color wheel 16A for the first time, the Y segment 164 is disposed at the incident position of light from the lens unit 15. Hence, the blue laser light is reflected by the color wheel 16A, and then passes through the predetermined optical system as explained with reference to FIG. 1, to become incident to the phosphor wheel 18A.

Here, with respect to the phosphor wheel 18A, the yellow phosphor 181 is disposed at the incident position of light from the lens unit 17. Hence, yellow fluorescent light, which is generated by the yellow phosphor 181, passes through the predetermined optical system as explained with reference to FIG. 1, to become incident to the color wheel 16A again (i.e., for the second time). At this point, the Y segment 164 is still disposed at the incident position of light from the lens unit 15. Therefore, the yellow fluorescent light incident to the color wheel 16A is transmitted through the color wheel 16A and extracted as yellow illumination light, which becomes incident to the light tunnel 21. Subsequently, the periods (1) through (4) of FIG. 11 are repeated as time passes.

As described above, each of red, green, blue, and yellow illumination light can be extracted in a time-shared order by means of combination of the color wheel 16A and the phosphor wheel 18A. By use of the phosphor wheel 18A, which has a segment for generating yellow fluorescent light and a segment for generating green fluorescent light, brightness of an image projected on a screen, etc., can be improved.

The reason for the above is as follows: in a case where luminance efficiencies (i.e., rates of emitted light quantity (W) to incident light quantity (W)) of a yellow phosphor and a green phosphor are approximately the same, when green color is made from yellow fluorescent light by use of a color wheel according to the first or the second embodiment, light is partially lost at the color wheel.

Even in such a case as the present embodiment, in which green color of green fluorescent light is transmitted through a color wheel, there may be a case of losing a small amount of light at the color wheel from adjusting the color. However, comparing to the case where green color is made from yellow fluorescent light by use of a color wheel, a smaller amount of light is lost.

Therefore, in the case where green color of green fluorescent light is transmitted through a color wheel, brightness of an image projected on a screen, etc., can be further improved. Further, in such a case, there is also an effect of reducing heat generation of a color wheel, as a smaller amount of light is lost at the color wheel.

However, in a case where luminance efficiency of a yellow phosphor is considerably higher than luminance efficiency of a green phosphor, there should be sufficient brightness even after losing light partially at a color wheel. Therefore, in such a case, green color may be made from yellow fluorescent light by use of a color wheel, as explained in the first embodiment and the second embodiment, for example.

Note that the effect of extracting yellow fluorescent light is the same as in the second embodiment.

### <Fourth Embodiment>

As the fourth embodiment, an example of changing characteristics of the phosphor wheel according to the third embodiment is explained. Note that, in the fourth embodiment, explanation for constituent elements that are the same in the above explained embodiments may be omitted.

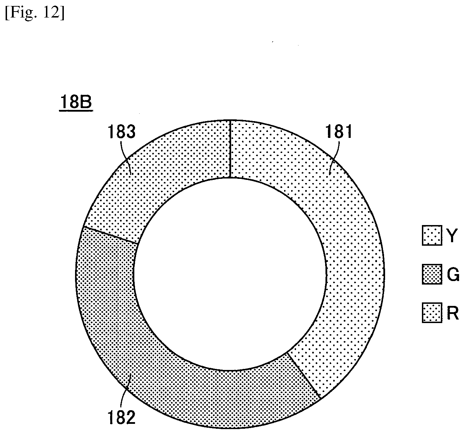

FIG. 12 is an enlarged plan view illustrating an example of a phosphor wheel used in the fourth embodiment, which is viewed from the light incident side. As illustrated in FIG. 12, a phosphor wheel 18B used in the present embodiment is a disk-shaped member divided into multiple segments for generating different fluorescent light, respectively, which is driven to rotate such that any one of the segments is irradiated with light from the wavelength-selective polarization splitting element 13 and is sequentially changed with rotation.

Specifically, the phosphor wheel 18B has three divided fan-shaped segments, i.e., a segment provided with the yellow phosphor 181 for generating yellow fluorescent light, a segment provided with the green phosphor 182 for generating green fluorescent light, and a segment provided with the red phosphor 183 for generating red fluorescent light. In other words, the phosphor wheel 18B is different from the phosphor wheel 18A (cf. FIG. 10) in terms of having the red phosphor 183.

The phosphor wheel 18B is driven by the driving unit 18m to rotate at predetermined timings, such that the incident position of light from the lens unit 17 is on one of the three segments that are switched with the rotation, i.e., the segment provided with the yellow phosphor 181, the segment provided with the green phosphor 182, or the segment provided with the red phosphor 183.

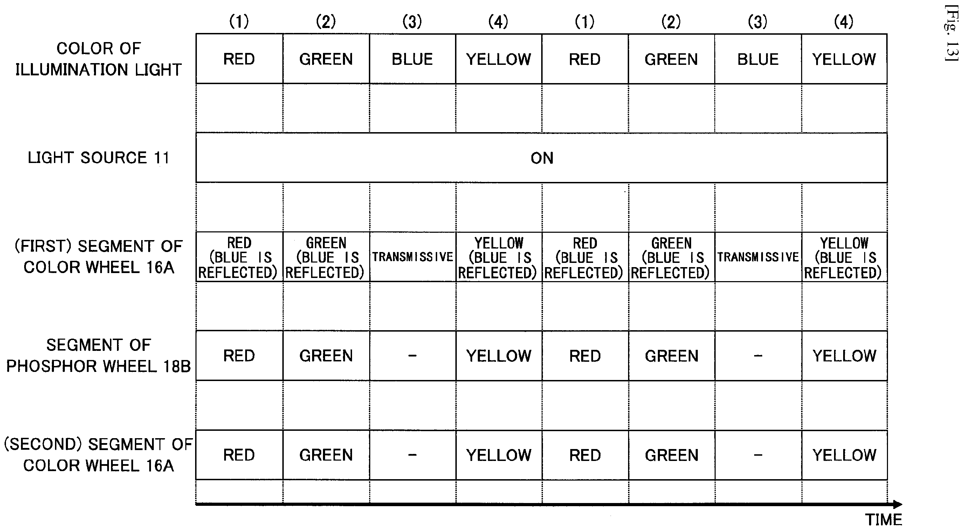

With reference to a timing chart illustrated in FIG. 13, the following description explains relations of colors extracted as illumination light, an emission state of the light source 11, (first) segments of the color wheel 16A, segments of the phosphor wheel 18B, and (second) segments of the color wheel 16A.

In the period where each of red, green, blue, and yellow illumination light is extracted in a time-shared order, the light source 11 is on a lighted state (i.e., ON-state).

With respect to the period (1) of FIG. 13 in which red illumination light is extracted, when blue laser light from the light source 11 becomes incident to the color wheel 16A for the first time, the R segment 161 is disposed at the incident position of light from the lens unit 15. Hence, the blue laser light is reflected by the color wheel 16A, and then passes through a predetermined optical system as explained with reference to FIG. 1, to become incident to the phosphor wheel 18B.

Here, with respect to the phosphor wheel 18B, the red phosphor 183 is disposed at the incident position of light from the lens unit 17. Hence, red fluorescent light, which is generated by the red phosphor 183, passes through the predetermined optical system as explained with reference to FIG. 1, to become incident to the color wheel 16A again (i.e., for the second time). At this point, the R segment 161 is still disposed at the incident position of light from the lens unit 15. Therefore, the red fluorescent light incident to the color wheel 16A is transmitted through the color wheel 16A and extracted as red illumination light, which becomes incident to the light tunnel 21.

The timing chart as illustrated in FIG. 13 is the same as the timing chart as illustrated in FIG.11, with respect to the period (2) in which green illumination light is extracted, the period (3) in which blue illumination light is extracted, and the period (4) in which yellow illumination light is extracted. Subsequently, the periods (1) through (4) of FIG. 13 are repeated as time passes.

As described above, each of red, green, blue, and yellow illumination light can be extracted in a time-shared order by means of combination of the color wheel 16A and the phosphor wheel 18B. By use of the phosphor wheel 18B, which has a segment for generating yellow fluorescent light, a segment for generating green fluorescent light, and a segment for generating red fluorescent light, brightness of an image projected on a screen, etc., can be improved.

The reason for the above is as follows: in a case where luminance efficiencies (i.e., rates of emitted light quantity (W) to incident light quantity (W)) of a yellow phosphor and a red phosphor are approximately the same, when red color is made from yellow fluorescent light by use of a color wheel according to the first, the second, or the third embodiment, light is partially lost at the color wheel.

Even in such a case as the present embodiment, in which red color of red fluorescent light is transmitted through a color wheel, there may be a case of losing a small amount of light at the color wheel from adjusting the color. However, comparing to the case where red color is made from yellow fluorescent light by use of a color wheel, a smaller amount of light is lost.

Therefore, in the case where red color of red fluorescent light is transmitted through a color wheel, brightness of an image projected on a screen, etc., can be further improved. Further, in such a case, there is also an effect of reducing heat generation of a color wheel, as a smaller amount of light is lost at the color wheel.

Note that brightness of an image projected on a screen, etc., can be improved in a case of using a green phosphor, as explained in the third embodiment.

However, in a case where luminance efficiency of a yellow phosphor is considerably higher than luminance efficiency of a red phosphor, there should be sufficient brightness even after losing light partially at a color wheel. Therefore, in such a case, red color may be made from yellow fluorescent light by use of a color wheel, as explained in the first embodiment through the third embodiment, for example.

Note that the effect of extracting yellow fluorescent light is the same as in the second embodiment.

### <Fifth Embodiment>

As the fifth embodiment, an example of changing arrangement of the optical system according to the first embodiment is explained. Note that, in the fifth embodiment, explanation for constituent elements that are the same in the above explained embodiments may be omitted.

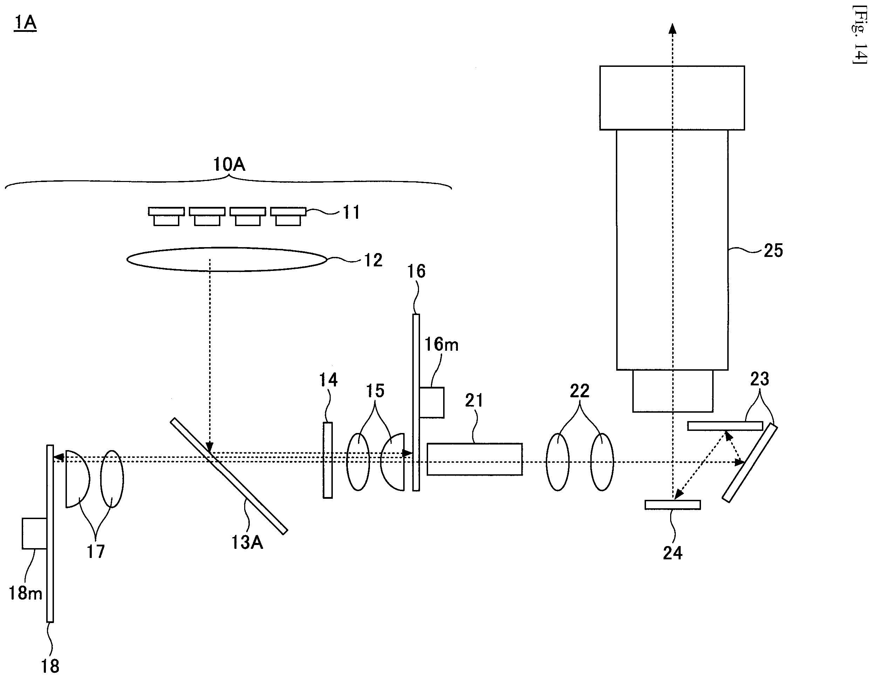

FIG. 14 is a drawing schematically illustrating an example of an image projection device according to the fifth embodiment. As illustrated in FIG. 14, an image projection device 1A includes an illumination device 10A, the light tunnel 21, the lens unit 22, the mirror unit 23, the image forming element 24, and the projection optical unit 25. The illumination device 10A is different from the illumination device 10 in terms of arrangement of the optical system. In addition, the illumination device 10A includes a wavelength-selective polarization splitting element 13A, instead of the wavelength-selective polarization splitting element 13.

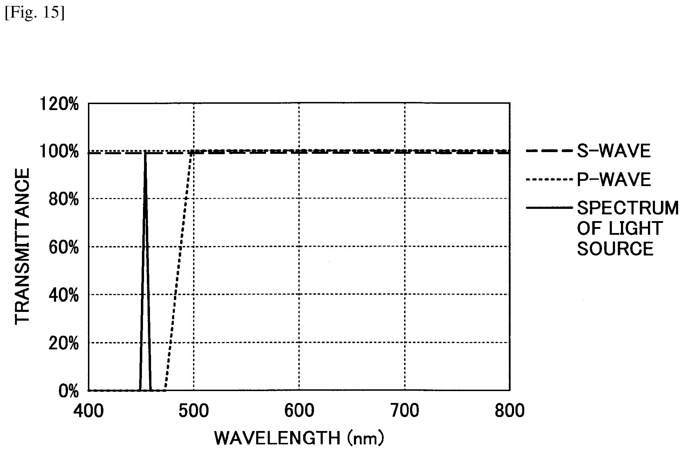

The blue laser light emitted from the light source 11 passes through the condenser lens 12 to become incident to the wavelength-selective polarization splitting element 13A. The wavelength-selective polarization splitting element 13A has spectral transmittance characteristics as illustrated in FIG. 15, for example.

That is to say, the wavelength-selective polarization splitting element 13A has characteristics not to transmit a P-wave (i.e., to reflect a P-wave) and to transmit an S-wave (i.e., to allow an S-wave to pass therethrough), with respect to light with the wavelength λB emitted by the light source 11. Note that, as indicated by the spectral transmittance characteristics illustrated in FIG. 15, light with wavelengths of approximately 500 nm or more is transmitted through the wavelength-selective polarization splitting element 13A, regardless of whether a P-wave or an S-wave (i.e., regardless of polarization characteristics). As the wavelength-selective polarization splitting element 13A, a polarizing beamsplitter may be used, for example.

Referring back to FIG. 14, blue laser light of a P-wave incident to the wavelength-selective polarization splitting element 13A is reflected by the wavelength-selective polarization splitting element 13A, to become incident to the quarter-wave plate 14. Light transmitted through the quarter-wave plate 14 is converted to light having circular polarization, and then condensed by the lens unit 15 to become incident to the color wheel 16.

When the transmissive segment 163 is disposed at the incident position of light from the lens unit 15, blue laser light incident to the color wheel 16 is transmitted through the color wheel 16 and extracted as blue illumination light, which becomes incident to the light tunnel 21.

Contrarily, when the R segment 161 or the G segment 162 is disposed at the incident position of light from the lens unit 15, blue laser light incident to the color wheel 16 is reflected by the color wheel 16. Then, the blue laser light reflected by the color wheel 16 passes through the lens unit 15 to become incident to the quarter-wave plate 14. The light transmitted through the quarter-wave plate 14 is converted from light having circular polarization to light having an S-wave (i.e., S-polarization), and then is incident to the wavelength-selective polarization splitting element 13A.

The blue laser light of an S-wave incident to the wavelength-selective polarization splitting element 13A is transmitted through the wavelength-selective polarization splitting element 13A, and then condensed by the lens unit 17 to become incident to the phosphor wheel 18.

By use of blue laser light incident to the phosphor wheel 18 as excitation light, the yellow phosphor 181 generates yellow fluorescent light. The yellow fluorescent light passes through the lens unit 17 to become incident to the wavelength-selective polarization splitting element 13A. The yellow fluorescent light is transmitted through the wavelength-selective polarization splitting element 13A (cf. FIG. 15), and then passes through the quarter-wave plate 14 and the lens unit 15 to become incident to the color wheel 16. What follows is the same as in the image projection device 1 as illustrated in FIG. 1.

As described above, the optical system may be arranged such that blue laser light emitted by the light source 11 is reflected by the wavelength-selective polarization splitting element 13A.

In the arrangement of the optical system as illustrated in FIG. 1, it is required that the light source 11 and the color wheel 16 are distant from each other to some extent (for condensing light), which causes the optical system to be larger in width. Contrarily, in the arrangement of the optical system as illustrated in FIG. 14, it is not required that the light source 11 and the color wheel 16 are arranged to face each other, which enables the optical system to be smaller in width. That is to say, the illumination device 10A can be further downsized, compared to the illumination device 10.

Furthermore, in the optical system as illustrated in FIG. 1, light is reflected twice at the wavelength-selective polarization splitting element 13. Hence, there is a concern that brightness is decreased due to tolerance effects caused by error in installing the wavelength-selective polarization splitting element 13. Contrarily, in the optical system as illustrated in FIG. 14, light is reflected only once at the wavelength-selective polarization splitting element 13A. Hence, it is possible to reduce concern that brightness is decreased due to tolerance effects caused by error in installing the wavelength-selective polarization splitting element 13A.

### <Sixth Embodiment>

As the sixth embodiment, another example of changing arrangement of the optical system according to the first embodiment is explained. Note that, in the second embodiment, explanation for constituent elements that are the same in the above explained embodiments may be omitted.

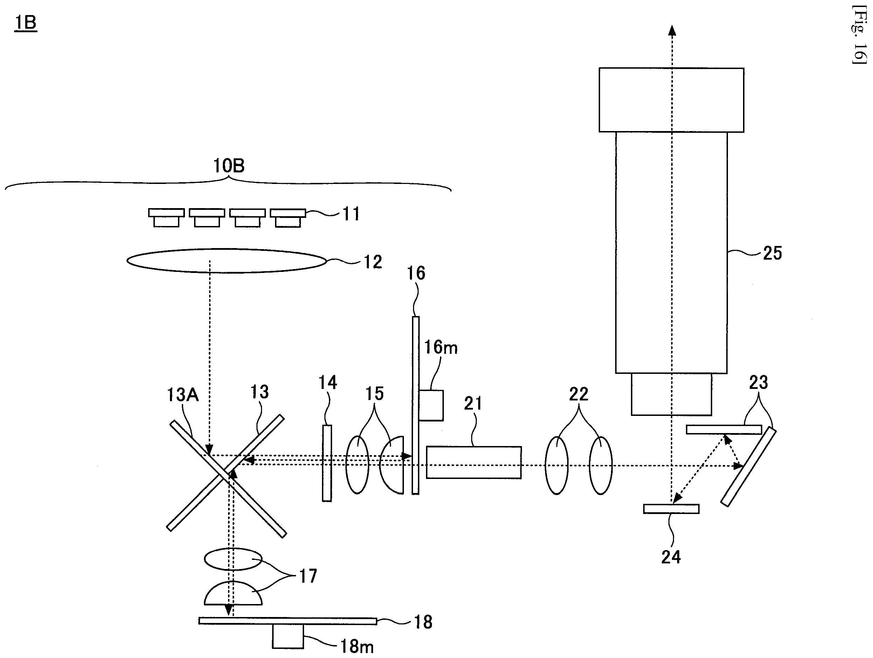

FIG. 16 is a drawing schematically illustrating an example of an image projection device according to the sixth embodiment. As illustrated in FIG. 16, an image projection device 1B includes an illumination device 10B, the light tunnel 21, the lens unit 22, the mirror unit 23, the image forming element 24, and the projection optical unit 25. The illumination device 10B is different from the illumination device 10 in terms of arrangement of the optical system. In addition, the illumination device 10B includes a wavelength-selective polarization splitting element 13A, in addition to the wavelength-selective polarization splitting element 13.

The blue laser light emitted from the light source 11 passes through the condenser lens 12 to become incident to the wavelength-selective polarization splitting element 13A. The wavelength-selective polarization splitting element 13A has spectral transmittance characteristics as illustrated in FIG. 15, for example.

Blue laser light of a P-wave incident to the wavelength-selective polarization splitting element 13A is reflected by the wavelength-selective polarization splitting element 13A, to become incident to the quarter-wave plate 14. Light transmitted through the quarter-wave plate 14 is converted to light having circular polarization, and then condensed at the lens unit 15 to become incident to the color wheel 16.

When the transmissive segment 163 is disposed at the incident position of light from the lens unit 15, blue laser light incident to the color wheel 16 is transmitted through the color wheel 16 and transmitted as blue illumination light, which becomes incident to the light tunnel 21.

Contrarily, when the R segment 161 or the G segment 162 is disposed at the incident position of light from the lens unit 15, blue laser light incident to the color wheel 16 is reflected by the color wheel 16. Then, the blue laser light reflected by the color wheel 16 passes through the lens unit 15 to become incident to the quarter-wave plate 14. The light transmitted through the quarter-wave plate 14 is converted from light having circular polarization to light having an S-wave (i.e., S-polarization), and then is incident to the wavelength-selective polarization splitting element 13.

The blue laser light of an S-wave incident to the wavelength-selective polarization splitting element 13 is reflected by the wavelength-selective polarization splitting element 13, and then condensed by the lens unit 17 to become incident to the phosphor wheel 18.

By use of blue laser light that becomes incident to the phosphor wheel 18 as excitation light, the yellow phosphor 181 generates yellow fluorescent light. The yellow fluorescent light passes through the lens unit 17 to become incident to the wavelength-selective polarization splitting element 13. The yellow fluorescent light is reflected by the wavelength-selective polarization splitting element 13 (cf. FIG. 2) and then passes through the quarter-wave plate 14 and the lens unit 15 to become incident to the color wheel 16. What follows is the same as in the image projection device 1 as illustrated in FIG. 1.

As described above, the image projection device 1B includes, as light guiding units, the wavelength-selective polarization splitting element 13, which transmits a P-polarization component of light (i.e., allows a first linear polarization component of source light to pass therethrough) and does not transmit an S-polarization component of the light and fluorescent light (i.e., reflects a second linear polarization component of the source light and fluorescent light), and the wavelength-selective polarization splitting element 13A, which does not transmit the P-polarization component of the light (i.e., reflects the first linear polarization component of the source light) and transmits the S-polarization component of the light and the fluorescent light (i.e., allows the second linear polarization component of the source light and the fluorescent light to pass therethrough).

Having such a configuration as described above, there is no need to arrange optical parts at an area (i.e., an area on the left of the wavelength-selective polarization splitting element 13 and the wavelength-selective polarization splitting element 13A in FIG. 16) by the wavelength-selective polarization splitting element 13 and the wavelength-selective polarization splitting element 13A on the opposite side of the light tunnel 21. Consequently, the illumination device 10B can be further downsized, compared to the illumination device 10 and the illumination device 10A.

Note that the wavelength-selective polarization splitting element 13 is a typical example of a first polarization splitting unit according to the present invention. Further, the wavelength-selective polarization splitting element 13A is a typical example of a second polarization splitting unit according to the present invention.

Although preferable embodiments are explained above, the present invention is not limited to the embodiments, and various variations and modifications may be made to the above embodiments without departing from the scope of the claims.

For example, the first linear polarization component of light emitted by the light source 11 may be an S-polarization component. In this case, spectral transmittance characteristics of the wavelength-selective polarization splitting element 13 and the wavelength-selective polarization splitting element 13A may be inverted with respect to P-polarization and S-polarization.

Further, each of the embodiments may be combined with each other, as appropriate. For example, with respect to the illumination device 10A as illustrated in FIG. 14 and the illumination device 10B as illustrated in FIG. 16, the color wheel 16A, the phosphor wheel 18A, and the phosphor wheel 18B may be included.

Further, although the illumination device according to each of the embodiments may be employed for a projector, which is an example of an image projection device, there is no limitation as such. For example, the illumination device may be employed for a head-up display, a head mounted display, etc.

### Reference Signs List

1, 1A, 1B image projection device
10, 10A, 10B illumination device
11 light source
12 condenser lens
13, 13A wavelength-selective polarization splitting element
14 quarter-wave plate
15, 17, 22 lens unit
16, 16A color wheel
16m, 18m driving unit
18, 18A, 18B phosphor wheel
21 light tunnel 23 mirror unit 24 image forming element 25 projection optical unit 161 R segment 162 G segment 163 transmissive segment 164 Y segment 181, 182, 183 phosphor

## Claims

1. An illumination device (10) comprising:
a light source (11) configured to emit source light;
a fluorescence generating unit (18) configured to generate fluorescent light by use of the source light from the light source as excitation light, the fluorescent light having a longer wavelength than the source light;
a wavelength selecting unit (16) comprising a first segment (163) and a second segment (161-162), the first segment allowing the source light to pass therethrough, and the second segment reflecting the source light while allowing the fluorescent light to pass therethrough, wherein the wavelength selecting unit disposes one of the first and second segments on the light paths of the source light and the fluorescent light alternately as time passes;
a polarization converting unit (14) disposed in a light path between the light source and the wavelength selecting unit and configured to convert polarization of light between linear polarization and circular polarization such that a first linear polarization component input thereto is converted into circular polarization and circular polarization input thereto is converted into a second linear polarization component perpendicular to the first linear polarization component; and
a light guiding unit (13) disposed in a light path between the light source and the polarization converting unit and configured to guide the first linear polarization component of the source light from the light source and the fluorescent light arriving from the fluorescence generating unit to the polarization converting unit and to guide the second linear polarization component of the source light arriving from the polarization converting unit to the fluorescence generating unit,
wherein, when the first segment is placed in the light path, the source light from the light source travels through the light guiding unit, the polarization converting unit, and the first segment of the wavelength selecting unit in sequential order for output as first illumination light, and
wherein, when the second segment is placed in the light path, the source light from the light source travels through the light guiding unit and the polarization converting unit to the wavelength selecting unit, and is then reflected by the second segment of the wavelength selecting unit to travel through the polarization converting unit and the light guiding unit to the fluorescence generating unit, which generates the fluorescent light traveling through the light guiding unit, the polarization converting unit, and the second segment of the wavelength selecting unit in sequential order for output as second illumination light, the second illumination light being output in a same direction as the first illumination light.

2. The illumination device according to claim 1, wherein the first illumination light has circular polarization.

3. The illumination device according to claim 1 or 2, wherein the light guiding unit includes
a first polarization splitting unit that allows the first linear polarization component to pass therethrough and reflects the second linear polarization component and the fluorescent light, and
a second polarization splitting unit that reflects the first linear polarization component and allows the second linear polarization component and the fluorescent light to pass therethrough.

4. The illumination device according to claim 1 or 2, wherein the light guiding unit is a polarization splitting element that allows the first linear polarization component to pass therethrough and reflects the second linear polarization component and the fluorescent light.

5. The illumination device according to claim 1 or 2, wherein the light guiding unit is a polarization splitting element that reflects the first linear polarization component and allows the second linear polarization component and the fluorescent light to pass therethrough.

6. The illumination device according to any one of claims 1 through 5, wherein the fluorescence generating unit is configured with a single-colored phosphor that does not move.

7. The illumination device according to any one of claims 1 through 5,
wherein the fluorescence generating unit is a disk-shaped member divided into multiple segments for generating different fluorescent light, respectively, and
wherein the fluorescence generating unit is driven to rotate such that any one of the multiple segments is irradiated with the source light and is sequentially changed with rotation.

8. The illumination device according to any one of claims 1 through 7, wherein the first segment of the wavelength selecting unit that allows the first linear polarization component to pass therethrough is configured with a diffuser panel that diffuses light.

9. The illumination device according to any one of claims 1 through 8, wherein the light source is a laser that emits blue light.

10. An image projection device comprising:
the illumination device according to any one of claims 1 through 9;
an optical path constituting unit (23) configured to constitute an optical path of the first illumination light and the second illumination light output from the illumination device;
an image forming element (24) disposed on the optical path; and
a projection optical unit (25) configured to project an image formed by the image forming element.

## Patentansprüche

1. Beleuchtungsvorrichtung (10) mit:
Einer Lichtquelle (11), die konfiguriert ist, um Quelllicht zu emittieren;
einer Fluoreszenzerzeugungseinheit (18), die konfiguriert ist, um fluoreszierendes Licht unter Verwendung des Quelllichts von der Lichtquelle als Anregungslicht zu erzeugen, wobei das fluoreszierende Licht eine längere Wellenlänge als das Quelllicht hat;
einer Wellenlängenauswahleinheit (16), die ein erstes Segment (163) und ein zweites Segment (161-162) umfasst, wobei das erste Segment das Quelllicht durchlässt und das zweite Segment das Quelllicht reflektiert, während das fluoreszierende Licht durchgelassen wird, wobei die Wellenlängenauswahleinheit eines der ersten und zweiten Segmente im Laufe der Zeit abwechselnd auf den Lichtbahnen des Quelllichts und des fluoreszierenden Lichts anordnet;
einer Polarisationsumwandlungseinheit (14), die in einer Lichtbahn zwischen der Lichtquelle und der Wellenlängenauswahleinheit angeordnet und konfiguriert ist, um die Polarisation von Licht zwischen linearer Polarisation und zirkularer Polarisation umzuwandeln, so dass ein erster linearer Polarisationskomponenten-Eintrag in zirkulare Polarisation und ein zirkularer Polarisations-Eintrag in eine zweite lineare Polarisationskomponente senkrecht zur ersten linearen Polarisationskomponente umgewandelt wird; und
einer Lichtleiteinheit (13), die in einer Lichtbahn zwischen der Lichtquelle und der Polarisationsumwandlungseinheit angeordnet und konfiguriert ist, um die erste lineare Polarisationskomponente des Quelllichts von der Lichtquelle und das von der Fluoreszenzerzeugungseinheit ankommende Fluoreszenzlicht zur Polarisationsumwandlungseinheit zu leiten, und um die zweite lineare Polarisationskomponente des von der Polarisationsumwandlungseinheit ankommenden Quelllichts zur Fluoreszenzerzeugungseinheit zu führen,
wobei, wenn das erste Segment in der Lichtbahn angeordnet ist, das Quelllicht in sequentieller Reihenfolge von der Lichtquelle durch die Lichtleiteinheit, die Polarisationsumwandlungseinheit und das erste Segment der Wellenlängenauswahleinheit geht, zur Ausgabe als erstes Beleuchtungslicht, und
wobei, wenn das zweite Segment in der Lichtbahn angeordnet ist, das Quelllicht von der Lichtquelle durch die Lichtleiteinheit und die Polarisationsumwandlungseinheit zur Wellenlängenauswahleinheit geht, und dann von dem zweiten Segment der Wellenlängenauswahleinheit reflektiert wird, um durch die Polarisationsumwandlungseinheit und die Lichtleiteinheit zu der Fluoreszenzerzeugungseinheit zu gehen, was das Fluoreszenzlicht erzeugt, das in sequentieller Reihenfolge durch die Lichtleiteinheit, die Polarisationsumwandlungseinheit und das zweite Segment der Wellenlängenauswahleinheit geht, zur Ausgabe als zweites Beleuchtungslicht, wobei das zweite Beleuchtungslicht in derselben Richtung wie das erste Beleuchtungslicht ausgegeben wird.

2. Beleuchtungsvorrichtung nach Anspruch 1, wobei das erste Beleuchtungslicht eine zirkulare Polarisation aufweist.

3. Beleuchtungsvorrichtung nach Anspruch 1 oder 2, wobei die Lichtleiteinheit umfasst:
eine erste Polarisationsaufteilungseinheit, die es der ersten linearen Polarisationskomponente ermöglicht, diese zu durchlaufen und die zweite lineare Polarisationskomponente und das fluoreszierende Licht reflektiert, und
eine zweite Polarisationsaufteilungseinheit, die die erste lineare Polarisationskomponente reflektiert und die zweite lineare Polarisationskomponente und das fluoreszierende Licht hindurchlässt.

4. Beleuchtungsvorrichtung nach Anspruch 1 oder 2, wobei die Lichtleiteinheit ein Polarisationsaufteilungselement ist, das es der ersten linearen Polarisationskomponente ermöglicht, durch diese hindurchzugehen und die zweite lineare Polarisationskomponente und das fluoreszierende Licht reflektiert.

5. Beleuchtungsvorrichtung nach Anspruch 1 oder 2, wobei die Lichtleiteinheit ein Polarisationsaufteilungselement ist, das die erste lineare Polarisationskomponente reflektiert und die zweite lineare Polarisationskomponente und das fluoreszierende Licht hindurchlässt.

6. Beleuchtungsvorrichtung nach einem der Ansprüche 1 bis 5, wobei die Fluoreszenzerzeugungseinheit mit einem einfarbigen Leuchtstoff konfiguriert ist, der sich nicht bewegt.

7. Beleuchtungsvorrichtung nach einem der Ansprüche 1 bis 5,
wobei die Fluoreszenzerzeugungseinheit ein scheibenförmiges Element ist, das in mehrere Segmente unterteilt ist, um jeweils unterschiedliches Fluoreszenzlicht zu erzeugen, und
wobei die Fluoreszenzerzeugungseinheit angetrieben wird, um sich so zu drehen, dass eines der mehreren Segmente mit dem Quelllicht bestrahlt wird und nacheinander mit der Drehung gewechselt wird.

8. Beleuchtungsvorrichtung nach einem der Ansprüche 1 bis 7, wobei das erste Segment der Wellenlängenauswahleinheit, das den Durchgang der ersten linearen Polarisationskomponente ermöglicht, mit einer Diffusorplatte konfiguriert ist, die Licht streut.

9. Beleuchtungsvorrichtung nach einem der Ansprüche 1 bis 8, wobei die Lichtquelle ein Laser ist, der blaues Licht emittiert.

10. Bildprojektionsvorrichtung mit:
der Beleuchtungsvorrichtung nach einem der Ansprüche 1 bis 9;
einer Ausbildungseinheit (23) für eine optische Bahn, die konfiguriert ist, um eine optische Bahn des ersten Beleuchtungslichts und des zweiten Beleuchtungslichts zu bilden, das von der Beleuchtungsvorrichtung ausgegeben wird;
einem Bilderzeugungselement (24), das auf der optischen Bahn angeordnet ist; und
einer optischen Projektionseinheit (25), die konfiguriert ist, um ein durch das Bilderzeugungselement erzeugtes Bild zu projizieren.

## Revendications

1. Dispositif d'éclairage (10), comprenant :
une source de lumière (11) configurée pour émettre une lumière de source ;
une unité de génération de fluorescence (18) configurée pour générer de la lumière fluorescente en utilisant la lumière de source provenant de la source de lumière en tant que lumière d'excitation, la lumière fluorescente ayant une longueur d'onde plus longue que la lumière de source ;
une unité de sélection de longueur d'onde (16) comprenant un premier segment (163) et un second segment (161-162), le premier segment permettant à la lumière de source de passer à travers celui-ci, et le second segment réfléchissant la lumière de source tout en permettant à la lumière fluorescente de passer à travers celui-ci, dans lequel l'unité de sélection de longueur d'onde dispose un des premier et second segments sur les chemins de lumière de la lumière de source et de la lumière fluorescente de façon alternée au fur et à mesure que le temps passe ;
une unité de conversion de polarisation (14) disposée dans un chemin de lumière entre la source de lumière et l'unité de sélection de longueur d'onde et configurée pour convertir la polarisation de lumière entre une polarisation linéaire et une polarisation circulaire de telle sorte qu'une première composante de polarisation linéaire entrée dans celle-ci soit convertie en polarisation circulaire et une polarisation circulaire entrée dans celle-ci soit convertie en une seconde composante de polarisation linéaire perpendiculaire à la première composante de polarisation linéaire ; et
une unité de guide de lumière (13) disposée dans un chemin de lumière entre la source de lumière et l'unité de conversion de polarisation et configurée pour guider la première composante de polarisation linéaire de la lumière de source provenant de la source de lumière et la lumière fluorescente arrivant de l'unité de génération de fluorescence vers l'unité de conversion de polarisation et pour guider la seconde composante de polarisation linéaire de la lumière de source arrivant de l'unité de conversion de polarisation vers l'unité de génération de fluorescence,
dans lequel, lorsque le premier segment est placé dans le chemin de lumière, la lumière de source provenant de la source de lumière se déplace à travers l'unité de guide de lumière, l'unité de conversion de polarisation, et le premier segment de l'unité de sélection de longueur d'onde en ordre séquentiel pour la sortie en tant que première lumière d'éclairage, et
dans lequel, lorsque le second segment est placé dans le chemin de lumière, la lumière de source provenant de la source de lumière se déplace à travers l'unité de guide de lumière et l'unité de conversion de polarisation vers l'unité de sélection de longueur d'onde, et est ensuite réfléchie par le second segment de l'unité de sélection de longueur d'onde pour se déplacer à travers l'unité de conversion de polarisation et l'unité de guide de lumière vers l'unité de génération de fluorescence, qui génère la lumière fluorescente se déplaçant à travers l'unité de guide de lumière, l'unité de conversion de polarisation, et le second segment de l'unité de sélection de longueur d'onde en ordre séquentiel pour la sortie en tant que seconde lumière d'éclairage, la seconde lumière d'éclairage étant sortie dans une même direction que la première lumière d'éclairage.

2. Dispositif d'éclairage selon la revendication 1, dans lequel la première lumière d'éclairage a une polarisation circulaire.

3. Dispositif d'éclairage selon la revendication 1 ou 2, dans lequel l'unité de guide de lumière inclut
une première unité de séparation de polarisation qui permet à la première composante de polarisation linéaire de passer à travers celle-ci et réfléchit la seconde composante de polarisation linéaire et la lumière fluorescente, et
une seconde unité de séparation de polarisation qui réfléchit la première composante de polarisation linéaire et permet à la seconde composante de polarisation linéaire et la lumière fluorescente de passer à travers celle-ci.

4. Dispositif d'éclairage selon la revendication 1 ou 2, dans lequel l'unité de guide de lumière est un élément de séparation de polarisation qui permet à la première composante de polarisation linéaire de passer à travers celui-ci et réfléchit la seconde composante de polarisation linéaire et la lumière fluorescente.

5. Dispositif d'éclairage selon la revendication 1 ou 2, dans lequel l'unité de guide de lumière est un élément de séparation de polarisation qui réfléchit la première composante de polarisation linéaire et permet à la seconde composante de polarisation linéaire et la lumière fluorescente de passer à travers celui-ci.

6. Dispositif d'éclairage selon l'une quelconque des revendications 1 à 5, dans lequel l'unité de génération de fluorescence est configurée avec un luminophore de couleur unique qui ne bouge pas.

7. Dispositif d'éclairage selon l'une quelconque des revendications 1 à 5,
dans lequel l'unité de génération de fluorescence est un organe en forme de disque divisé en de multiples segments pour générer une lumière fluorescente différente, respectivement, et
dans lequel l'unité de génération de fluorescence est entraînée pour entrer en rotation de telle sorte qu'un quelconque des multiples segments soit irradié avec la lumière de source et soit séquentiellement changé avec la rotation.

8. Dispositif d'éclairage selon l'une quelconque des revendications 1 à 7, dans lequel le premier segment de l'unité de sélection de longueur d'onde qui permet à la première composante de polarisation linéaire de passer à travers celui-ci est configuré avec un panneau diffuseur qui diffuse la lumière.

9. Dispositif d'éclairage selon l'une quelconque des revendications 1 à 8, dans lequel la source de lumière est un laser qui émet de la lumière bleue.

10. Dispositif de projection d'image, comprenant :
le dispositif d'éclairage selon l'une quelconque des revendications 1 à 9 ;
une unité de constitution de chemin optique (23) configurée pour constituer un chemin optique de la première lumière d'éclairage et de la seconde lumière d'éclairage sorties du dispositif d'éclairage ;
un élément de formation d'image (24) disposé sur le chemin optique ; et
une unité optique de projection (25) configurée pour projeter une image formée par l'élément de formation d'image.
